# EUROPÄISCHE PATENTANMELDUNG

(11) **EP 4 563 951 A1**
(43) Veröffentlichungstag der Anmeldung: **04.06.2025**
(21) Anmeldenummer: 24401026.0
(22) Anmeldetag: 30.10.2024
(51) Int. Cl.: G01F 1/667, G01N 29/024, G01N 29/22, G01F 1/66

(54) **SCHALLGESCHWINDIGKEITSSENSOR**

(30) Priorität: 28.11.2023 DE 102023133190
(71) Anmelder: Technische Universität Chemnitz Körperschaft des öffentlichen Rechts, 09111 Chemnitz (DE)
(72) Erfinder: Bauer, Tobias, 09212 Limbach-Oberfrohna (DE); Cikmaz, Caner, 09111 Chemnitz (DE); Richter, Markus, 09125 Chemnitz (DE)
(74) Vertreter: Rumrich, Gabriele

(57) **Zusammenfassung**

Die Erfindung betrifft einen Schallgeschwindigkeitssensor (10) für ein Fluid (FL), mit mindestens einer Messkammer (11), in welcher mindestens ein Schallwandler (14, 15) angeordnet ist, wobei zu der Messkammer (11) mindestens eine Eintrittsöffnung (12) und mindestens eine Austrittsöffnung (13) führt und die Messkammer (11) von dem Fluid (FL) zur Realisierung einer Messung befüllbar/durchströmbar ist, wobei der Schallgeschwindigkeitssensor (10) in einer von dem Fluid (FL) durchströmten Fluidleitung (1) angeordnet ist und von Fluid (FL) umströmt ist. (Figur 1)

## Beschreibung

Die Erfindung betrifft einen Schallgeschwindigkeitssensor nach dem Oberbegriff des ersten Patentanspruchs.

In DE 10 2011 121 867 A1 wird ein Verfahren zur Messung von thermodynamischen Zustandsgrößen von Gasen oder Flüssigkeiten beschrieben. Das Verfahren verfügt über eine Empfänger- und/oder Sendeeinrichtung, einen elektromagnetischen Schwinger und/oder Resonator (Schallwandler) sowie eine Piezoelementanordnung, welche den Schall erzeugt. Das Messsystem eignet sich für Temperaturen deutlich über 200°C. Der Resonator wird durch einen zylindrischen Körper gebildet, an dessen Rückwand der Schallwandler angebracht ist. Der Schallwandler erfasst die jeweilige reflektierte Welle und gibt ein entsprechendes elektrisches Signal weiter, welches ausgewertet wird.

In DE 10 2011 102 641 A1 werden eine Vorrichtung bzw. ein Verfahren zur quantitativen Erfassung mindestens einer physikalischen Größe eines Gases oder Flüssigkeit beschrieben. Das Verfahren verfügt über zwei Messkammern, die über eine Trennwand miteinander verbunden sind. Die Messkammern sind mit Schallwandlern ausgestattet. Die Messung erfolgt über einem Nullabgleich eines bekannten Referenzmediums und dem unbekannten Probemediums. Das Verfahren verfügt über einen piezoelektrischen Schwinger, der zeitgleich in das Referenz- und Probemedium einkoppelt.

In EP 3 612 829 B1 wird ein akustischer Sensor beschrieben, der über eine Seitenwand und eine zweite Endwand um einen fluidgefüllten zylindrischen Hohlraum verfügt. Der Sensor nutzt die unterschiedlichen akustischen Resonanzen von Gasen für das zugrunde liegende Messprinzip aus, um auf charakterisierende Schallgeschwindigkeiten zu schließen (lineare Proportionalität).

In DE 10 2008 014 300 A1 wird ein Verfahren zur Bestimmung von Zustandsänderungen von Stoffgemischen mittels Messung der Schallgeschwindigkeit mittels eines Schallwandlers beschrieben. Diese Zustandsänderungen werden über die Dämpfung des eingebrachten Ultraschalls bzw. und/oder der Schallgeschwindigkeit bestimmt.

In DE 10 2005 051 876 B3 wird ein fluidisch-akustischer Oszillator beschrieben, in dessen Resonanzkammern Schallwellen erzeugt werden, die mittels dynamischer Druckwandler in elektrische Signale umgewandelt werden. Dieser Oszillator ist vorzugweise für binäre Gasgemische bei Temperaturen bis 300°C anzuwenden.

In DE 36 13 125 A1 wird ein planarer akustischer Gaszusammensetzungssensor beschrieben, der für verschmutzte Gase bei Temperaturen bis 100°C eingesetzt werden kann. Der Sensor besteht aus fünf planaren Platten (zwei Schwingplatten, einer Trennplatte und zwei Hüllplatten). Diese Bauweise zeichnet sich durch eine einfache Montage und Demontage aus.

In EP 2 788 748 B1 wird ein akustischer Sensor beschrieben, der im Wesentlichen über einen scheibenförmigen akustischen Hohlraum und kreisförmigen Endwänden besteht. Die Endwände sind mit Schallwandlern ausgestattet, die die generierten Druckschwankungen in oszillierende elektrische Signale überführen.

Der entscheidende Nachteil dieser Sensoren besteht darin, dass diese nicht platzsparend und meist außerhalb der Fluidleitungen angeordnet sind.

In den Druckschriften US 5 060 506 A, DE 690 17 376 T2, US 6 468 222 B1 und DE 692 19 316 T2 werden Schallgeschwindigkeitssensoren für Fluidleitungen offenbart, die in der Fluidleitung angeordnet sind und einen komplizierten konstruktiven Aufbau aufweisen.

Die Aufgabe der Erfindung besteht daher darin, einen Schallgeschwindigkeitssensor zu entwickeln, der platzsparend angeordnet ist und einen einfachen konstruktiven Aufbau aufweist. Darüber hinaus soll eine Prozessintegration zur Prozessüberwachung realisierbar sein.

Diese Aufgabe wird erfindungsgemäß mit den Merkmalen des ersten Patentanspruchs gelöst.

Vorteilhafte Ausgestaltungen ergeben sich aus den Unteransprüchen.

Der erfindungsgemäße Schallgeschwindigkeitssensor für ein Fluid weist mindestens eine Messkammer auf, in welcher mindestens ein Schallwandler angeordnet ist, wobei zu der Messkammer mindestens eine Eintrittsöffnung und mindestens eine Austrittsöffnung führen und die Messkammer von dem Fluid zur Realisierung einer Messung befüllbar/durchströmbar ist, wobei der Schallgeschwindigkeitssensor in einer von dem Fluid durchströmten Fluidleitung angeordnet ist und von Fluid bevorzugt gleichmäßig umströmt ist und wobei die Messkammer in einem diese umfangsseitig umhüllenden Mantel axial verschiebbar und drehfest angeordnet ist und der Mantel in der Fluidleitung gestellfest positioniert ist.

Durch diese In-Line Anordnung des Schallgeschwindigkeitssensors direkt in der Fluidleitung wird eine platzsparende Ausgestaltung möglich und es können zuverlässige Messungen realisiert werden.

Vorzugsweise ist der Messkammer mindestens ein erster Schallwandler und mindestens ein zweiter Schallwandler angeordnet, wobei der erste und der zweite Schallwandler jeweils mit einer Mess-/Auswerteeinheit verbunden sind.

Die Trennung der Schallwandler zur Messkammer erfolgt bevorzugt durch einen Deckel in Form eines Diaphragmas. Im Deckel ist eine Senkung, der Boden der Senkung fungiert als Diaphragma mit dem angeklebten Schallwandler. In diesem Deckel befinden sich die Löcher, seitlich vom Schallwandler sowie seitlich zur Senkung, durch welche das Fluid strömen kann.

Vorteilhafter Weise ist der Mantel in der Fluidleitung für einen geringen Strömungsverlust bevorzugt mittig positioniert.

Bei geöffneter Eintritts- und Austrittsöffnung fließt das Fluid durch die Messkammer.

Zur Durchführung einer Messung sind die Eintrittsöffnung/en der Messkammer verschließbar. Dazu ist beispielsweise an dem Mantel wenigstens ein radial nach innen weisender Anschlag vorhanden, mit dem die mindestens eine Eintrittsöffnung/en verschließbar ist/sind.

Weiterhin sind zur Durchführung der Messungen auch die Austrittsöffnungen der Messkammer verschlossen.

Zur Realisierung der geschlossenen ersten Position, in welcher eine Messung erfolgt, liegt die Messkammer an dem radial nach innen weisenden Anschlag des Mantels an und die Eintrittsöffnungen sind verschlossen. Weiterhin verschießt der Mantel umfangsseitig die Austrittsöffnungen.

Die Messkammer ist in einer zweiten Position, in welcher bevorzugt keine Messung erfolgt, von dem Anschlag beabstandet, so dass die mindestens eine Eintrittsöffnung frei ist. In dieser zweiten Position wurden durch den Mantel auch die mindestens eine Austrittsöffnung der Messkammer freigegeben. Durch die mindestens eine Eintrittsöffnung tritt nun Fluid aus der Leitung in die Messkammer ein und aus der mindestens einen Austrittsöffnung aus der Messkammer in die Leitung aus.

Zur Realisierung einer Axialbewegung der Messkammer zu deren Verschieben in Bezug auf den Mantel für das Öffnen und Schließen der Ein- und Austrittsöffnung/en steht die Messkammer mit einem Elektromagneten in Wirkverbindung, bei dessen Betätigung die Messkammer entgegen einer Federkraft einer Feder (bevorzugt eine Druckfeder) aus der geschlossenen ersten (Mess-) Position in die geöffnete zweite (Durchström-) Position innerhalb des Mantels axial verschiebbar ist.

Die Messkammer weist dabei ein Gehäuse mit einem Hohlraum und an ihren beiden Enden Verschlusselemente auf, die an ihren Außenseiten beispielsweise flach (zur Resonanz) ausgebildet ist. Die flache Außenseite mit einer dünnen Trennwand zur Messkammer hin ist notwendig zur Resonanzmessung.

Alternativ kann auch zumindest die in Anströmrichtung des Fluids angeordnete Außenseite des in Anströmrichtung positionierten Verschlusselementes zur Reduzierung des Strömungswiderstandes entsprechend ausgeführt sein, beispielsweise mit einer sphärisch gekrümmten Oberfläche, insbesondere ballig oder in Form eines Kegels. Dabei weist das in Anströmrichtung angeordnete erste Verschlusselement die Eintrittsöffnungen auf.

Die Austrittsöffnungen führen bevorzugt axial oder in einem Winkel durch das zweite Verschlusselement und/oder bevorzugt radial durch das Gehäuse.

Das erste und zweite Verschlusselement weisen in Richtung zum Hohlraum der Messkammer den ersten und zweiten Schallwandler auf. Bevorzugt ist je eine Aussparung in Richtung zum Hohlraum in jedem Verschlusselement vorgesehen, in welchem jeweils ein Schallwandler positioniert ist.

Um einen guten Durchfluss auch bei eventuellen Verschmutzungen des Fluids zu garantieren, weisen die Austrittsöffnungen vorteilhafter Weise einen größeren Durchmesser auf, als die Eintrittsöffnungen.

Der erste und der zweite Schallwandler bestehen bevorzugt aus Materialien, die einen piezoelektrischen Effekt aufweisen. Dies können beispielsweise Piezokristalle, Piezokeramik, z.B. technischer Keramik wie Blei-Zirkonat-Titanat (PZT) oder auch Schwingquarze sein. Die Schallwandler sind insbesondere zum Messen und zum Anregen ausgebildet.

Der in eine Fluidleitung integrierte Schallgeschwindigkeitssensor kann beispielsweise zur Bestimmung der Dichte und/oder Wärmekapazität eines Fluids eingesetzt werden. Das Fluid kann beispielsweise ein Wärmeträger oder ein Kältemittel in einem Wärmeträgerkreislauf oder Kältemittelkreislauf sein (oder auch Gas Pipelines, etc.).

De erfindungsgemäße Lösung wird bevorzugt für einphasige, insbesondere gasförmige Medien eingesetzt
Über die Messung der Medien mittels des erfindungsgemäßen Schallgeschwindigkeitssensors als Inline-Variante in der Fluidleitung kann auf einfache und elegante Weise über die Dichte des Fluids auf dessen Wärmekapazität geschlossen werden. Dies ist wiederum ein wichtiger Wert für die Berechnung der Energiebilanz in einem Wärmeträgerkreislauf oder Kältemittelkreislauf.

Es kann in der Leitung zusätzlich ein Zugang für einen Temperatur- und/ Drucksensor (nicht dargestellt) integriert werden.

Entgegen der Federkraft wird ein von außen gewickelter (Wicklung nicht dargestellt) Elektromagnet betätigt und dadurch die Messkammer nach Beendigung eines Messvorganges geöffnet, sodass das Fluid durch diese strömen kann.

Durch die Messkammer mit kegelförmigen Enden ist es möglich, deren Strömungswiderstand zu reduzieren.

Bevorzugt umfasst der Eintritt sechs axial verlaufende Eintrittsöffnungen, insbesondere mit einem Durchmesser von 1,5 mm. Austrittsseitig sind bevorzugt zehn gleichmäßig über den Umfang verteilte (im Winkel von 36°) radiale Löcher angeordnet, deren Durchmesser beispielsweise 2 mm beträgt.

Die Fluidleitung kann mithilfe von Flanschen oder anderen passenden Verbindungen mechanisch an ein System, welches von dem Fluid durchströmt wird, angeschlossen werden.

Der vordere Kegel besitzt axial symmetrische Löcher über die das Fluid hereinströmen kann.

Beide Schallwandler sind über feine Kabel (z.B. IEC 60228 Klasse 6, VDE 0295) mit einem nicht dargestellten Lock-In Verstärker verbunden, der als Oszillator sowie zur Frequenzmessung verwendet wird.

Die Fluidströmung verläuft im geöffneten Zustand des Schallgeschwindigkeitssensors durch den vorderen Kegel hin zu den radialen Austrittlöchern vor dem hinteren Kegel.

Bei einem deaktivierten Elektromagneten schließt durch die Rückstellkraft der Feder die Messkammer, ohne elektrische Störfelder oder Signale zu erzeugen.

Der entsprechend ausgelegte Elektromagnet (abhängig von Dichte und Geschwindigkeit öffnet die Messkammer bei dessen Betätigung entgegen der Federkraft der Rückstellfeder vor einem Messvorgang. Die Feder wird dabei nach Dichte und Geschwindigkeit ausgelegt und der Elektromagnet entsprechend der Feder mit einer größeren Kraft als die Kraft der Feder.

Es ist möglich, zur Anpassung der Federkraft, bei veränderlicher Dichte vom Fluid noch eine Spindel zusätzlich zur Feder zu integrieren, wie bei Sicherheitsventilen bereits angewandt.

Die Messkammer ist zur Realisierung der Axialbewegung für den Öffnungsvorgang und den Schließvorgang in dem (rohrförmigen) Mantel gelagert, so dass der radial nach innen weisende Anschlag auch zur Dichtung der Eintrittsöffnungen beim Messvorgang verwendet wird.

Nachfolgend wird das Messprinzip erläutert:
Die Schallwandler sind bevorzugt identische Piezokeramiken mit festgelegten Maßen. Beide Schallwandler können zum Messen als auch zum Anregen verwendet werden.

Der erste Schallwandler wird bei mit Fluid gefüllter und geschlossener Messkammer mit hochfrequenten Spannungen im mV-Bereich beaufschlagt und regt das Diaphragma (nicht dargestellt des ersten Schallwandlers an. Die Schallwandler haben beispielsweise folgende Spezifikation: K350 PZT Disc Diameter 10mm x 0.4mm thick gold plated.

Das Diaphragma besteht bevorzugt aus einem leitenden metallischen Werkstoff, der entsprechend des Fluid korrosionsbeständig ist, damit der Werkstoff seine Oberflächenbeschaffenheit nicht verliert, insbesondere aus Edelstahl. Es ist aber auch ein anderer Werkstoff, bevorzugt ein leitender metallischer Werkstoff möglich, der entsprechend des Fluids korrosionsbeständig ist, damit der Werkstoff seine Oberflächenbeschaffenheit nicht verliert.

Die Schwingungen werden hierbei auf das Fluid (z. B. Gas) in der Messkammer zwischen den Schallwandlern übertragen. Die Schwingungen verursachen eine Resonanzfrequenz im Fluid, die von der Zusammensetzung des Fluids (z. B. Gas) abhängt. Aufgrund der geringen Spannung in Höhe von z.B. nur 1V werden Spannungsspitzen beim zweiten Schallwandler explizit bei Resonanzfrequenzen, die sich in Schwingungsmoden äußern, gemessen und ausgewertet.

Das spezifische Verhältnis von Länge zu Durchmesser des Innenraumes (Hohlraumes, z. B. 4/3 für Gase) der Messkammer ermöglicht die Isolierung der zweiten longitudinalen Mode, sodass keine Interferenzen mit anderen Moden oder Resonanzen entstehen. (Beispielsweise bei einem gewählten Innendurchmesser von 24mm ergibt sich eine Innenlänge von 32mm des Hohlraumes der Messkammer.)

Folglich kann allein die Resonanzfrequenz der isolierten Mode gemessen werden.

Das Grundrauschen kann dadurch deutlich vom Peak unterschieden werden.

Eine Minimierung des Grundrauschens würde erfolgen, wenn Störgrößen, wie Bohrungen kleiner werden oder Mehrphasen vermieden werden.

Die Frequenzmessung und -auswertung kann entsprechend der geforderten Unsicherheit angepasst werden.

Die Frequenz steht hierbei im direkten physikalischen mathematisch beschreibbaren Zusammenhang zur Schallgeschwindigkeit.

Beschreibung des Messvorgangs:
Der Elektromagnet öffnet bei dessen Betätigung entgegen der Federkraft der Rückstellfeder die Eintrittsöffnungen und die Austrittsöffnungen durch entsprechendes Verschieben der Messkammer. Dadurch kann das Fluid die Messkammer durchströmen. Wird der Elektromagnet deaktiviert, wirkt die Kraft der Rückstellfeder und die Messkammer wird in ihre geschlossene Position zurückgeschoben, bei welcher die Eintrittsöffnungen und bevorzugt auch die Austrittsöffnungen verschlossen sind. Das Fluid ist nun in der Messkammer eingeschlossen.

Die eingetragene Schwingung über den ersten Schallwandler erzeugt nun eine stehende Welle, die einen Peak bei der gesuchten longitudinalen Mode besitzt. Hierzu wird die Frequenz über ein breites Spektrum eingetragen und beim zweiten Schallwandler kontinuierlich gemessen.

Der mit dem ersten und zweiten Schallwandler gekoppelte Lock-In Verstärker verstärkt das erhaltene Signal bzw. die Signale und vergleicht/"locked" dieses/diese mit einem Referenzsignal des Erregersignals (z. B. des Erregersignals des ersten Schallwandlers), sodass die gesuchte Frequenz auch phasenverschoben gemessen werden kann.

In: Jonas Herick "Aufbau eines F-Praktikum-Versuchs: Lock-In-Verstärker mit computergestützter Signalverarbeitung in LabVIEW, Bachelor-Arbeit an der Fakultät für Physik und Astronomie der Ruhr-Universität Bochum, 2007" wird auf Seite 8 dargelegt: "Lock-In-Messtechnik ist ein äußerst wirkungsvolles Verfahren, welches als erstes durch den US-amerikanischen Physiker Robert Henry Dicke zur Untersuchung extrem schwacher Mikrowellenstrahlung angewandt wurde. Es ist möglich, sowohl die Amplitude, also die Signalstärke, als auch die Phase verrauschter, harmonischer Signale zu messen. Das Prinzip des Lock-In-Verstärkers beruht dabei auf der Modulation der zu messenden Größe mittels eines Referenzsignals gleicher Frequenz. Der Name beschreibt dabei bereits, das Nutz- und Referenzsignal bei dieser Schaltung "locked", also gewissermaßen miteinander verschlossen bleiben."

Die gemessene Resonanzfrequenz wird zur Bestimmung der Schallgeschwindigkeit rechnerisch ausgewertet.

Die Erfindung wird nachfolgend anhand von Ausführungsbeispielen näher erläutert.

Es zeigen:
- Figur 1: Prinzipskizze der Anordnung des Schallgeschwindigkeitssensors,
- Figur 2: Prinzipskizze eines Schallgeschwindigkeitssensors, der in einer Leitung angeordnet ist in einer geschlossenen Position (Messposition),
- Figur 3: Schallgeschwindigkeitssensor gemäß Figur 2 in geschlossener Position,
- Figur 4: Darstellung einer weiteren Ausführung eines Schallgeschwindigkeitssensors in einer Leitung.

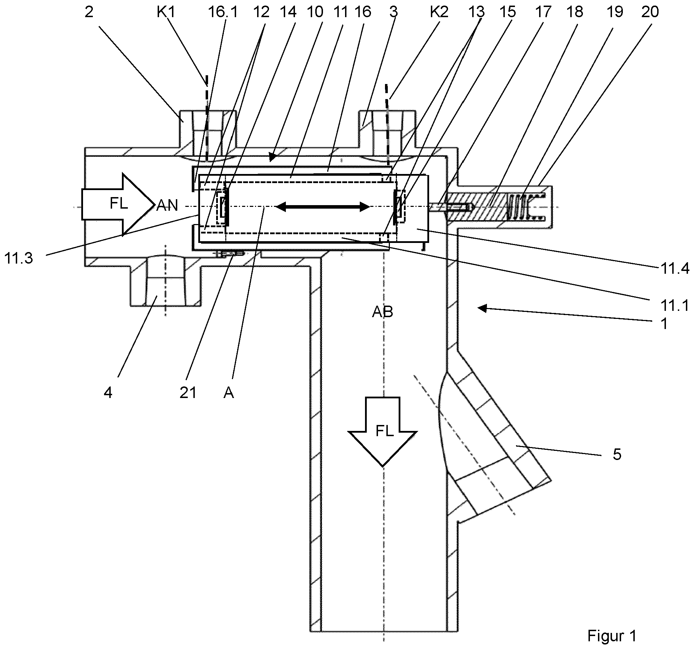

**Figur 1** zeigt eine Prinzipskizze einer erfindungsgemäßen Lösung, bei welcher in eine Fluidleitung 1 ein Schallgeschwindigkeitssensor 10 integriert ist, der sich hier in einer geschlossenen (Mess-) Position befindet. Der Schallgeschwindigkeitssensor 10 wird in der Fluidleitung 1 von Fluid FL umströmt.

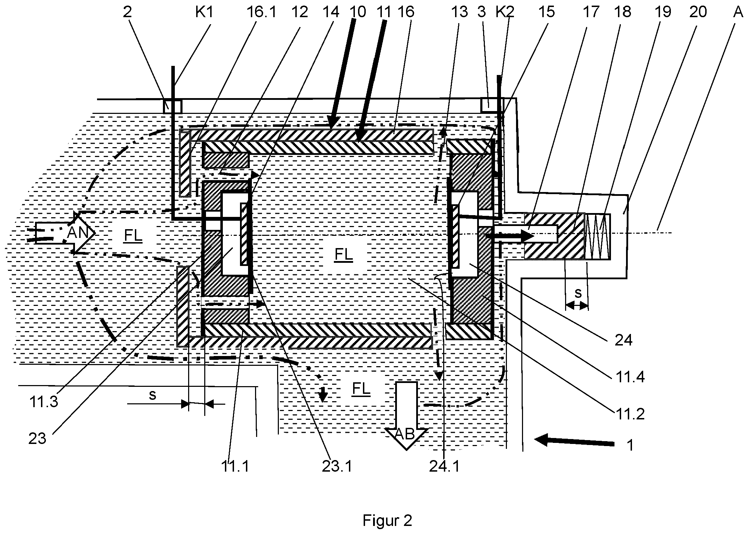

Der Schallgeschwindigkeitssensor 10 (siehe auch **Figuren 2 bis 4****)** weist eine Messkammer 11 mit einem im Wesentlichen zylindrisch ausgebildeten Gehäuse 11.1 auf, in dem ein Hohlraum 11.2 ausgebildet ist. Das Gehäuse 11.1 (gestrichelt dargestellt) ist endseitig in Anströmrichtung AN eines Fluids FL mit einem ersten Verschlusselement 11.3 und in Abströmrichtung AB des Fluids FL (siehe dicke Pfeile in der Fluidleitung 1) mit einem zweiten Verschlusselement 11.4 versehen. In dem erstem Verschlusselement 11.3 sind mehrere axial verlaufende Eintrittsöffnungen 12 vorhanden, die zum Hohlraum 11.2 führen und vor dem zweiten Verschlusselement 11.4 sind Richtung in dem Gehäuse 11.1 radial verlaufende Austrittsöffnungen 13 vorhanden.

In bzw. an dem ersten Verschlusselement 11.3 ist in Richtung zum Hohlraum 11.2 ein erster Schallwandler 14 (nicht näher dargestellt) und in bzw. an dem zweiten Verschlusselement 11.4 ist ebenfalls in Richtung zum Hohlraum 11.2 ein zweiter Schallwandler 15 angeordnet (ebenfalls nicht näher dargestellt). Die Messkammer 11 ist axial verschiebbar und drehfest in einem bevorzugt zylindrischen Mantel 16 gelagert. Der Mantel 16 weist auf der Seite des ersten Verschlusselements 11.3 einen radial nach innen weisenden Anschlag 16.1 auf, der in der dargestellten geschlossenen Position die Eintrittsöffnungen 12 verschließt. Weiterhin weist der Mantel 16 eine Länge auf, durch welche er die im Gehäuse 11.1 vorhandenen radialen Austrittsöffnungen 13 in der dargestellten Position verschließt.

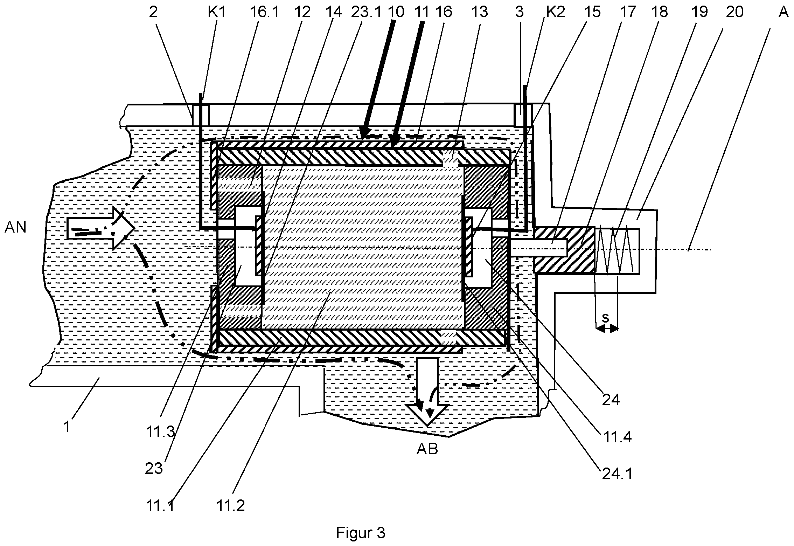

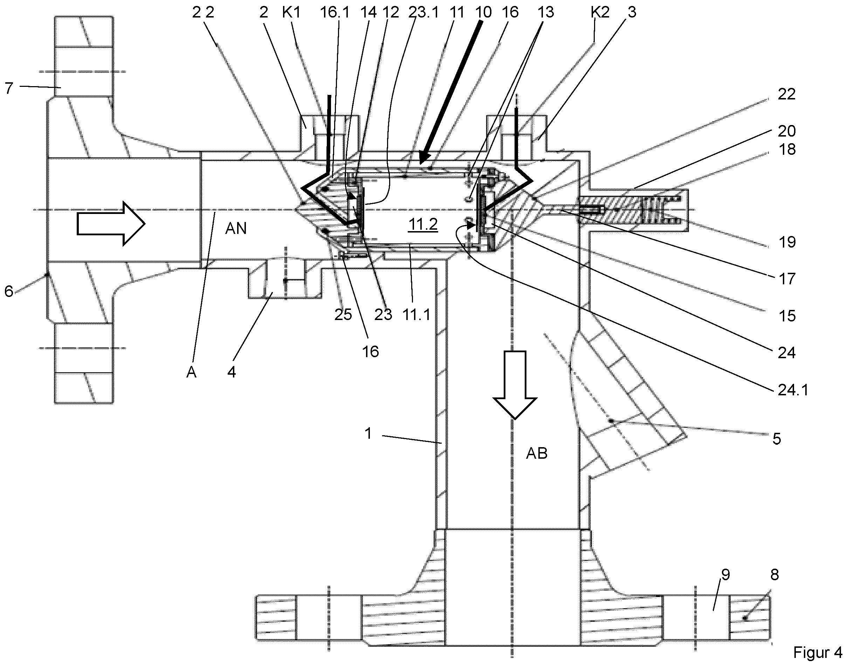

Zur Realisierung der Axialbewegung zum Öffnen und Schließen der Ein- und Austrittsöffnungen 12, 13 weist die Messkammer 11 an ihrem zweiten Verschlusselement 11.4 einen im Wesentlichen in Richtung der Längsachse Ader Messkammer 11 angeordneten und nach außen ragenden Stößel 17 auf. Dieser ist endseitig mit einem Elektromagneten 18, von dem hier nur der Eisenkern dargestellt ist, der im Weiteren als Elektromagnet 18 bezeichnet wird, fest verbunden, gegen welchen eine Feder 19 (insbesondere eine Druckfeder) wirkt. Im deaktivierten Zustand des Elektromagneten 18 wird dieser, und über den Stößel 17 auch die Messkammer 11, in Richtung des radial nach innen weisenden Anschlags 16.1 des Mantels 16 gedrückt (hier nach links). Mit Anliegen des ersten Verschlusselementes 11.3 am radial nach innen weisenden Anschlag 16.1 des Mantels 16 sind die Eintrittsöffnungen 12 des ersten Verschlusselementes verschlossen und auch der axial verlaufende Mantel 16 greift über die Austrittsöffnungen 13 des Gehäuses 11.1 der Messkammer 11. Dadurch sind die Eintrittsöffnungen 12 und die Austrittsöffnungen 13 der Messkammer 11 geschlossen. Das Fluid FL ist in dieser ersten Position in Form der Messposition in der Messkammer 11 eingeschlossen und mit dem ersten und zweiten Schallwandler 14, 15 können nun die erforderlichen Messungen erfolgen (siehe auch **Figuren 3** **und** **4****).**

Zum Öffnen der Eintrittsöffnungen 12 und der Austrittsöffnungen 13 wird der Eisenkern/Elektromagnet 18 aktiviert, so dass sich dieser gegen die Federkraft der Feder 19 hier nach rechts bewegt. Dadurch wird auch die Messkammer 11 über den Stößel 17 in dem Mantel 16 nach rechts bewegt und die Eintrittsöffnungen 12 sowie die Austrittsöffnungen 13 freigegeben (siehe **Figur 2****).**

Der Elektromagnet 18 und die Feder 19 sitzen beispielsweise in einer Ausstülpung 20 der Fluidleitung 1.

Der bewegte Kern vom Elektromagneten 18 ist bevorzugt ein Kern eines von außen gewickelter Elektromagnet 18, wobei die Wicklungen hier nicht dargestellt sind.

Obwohl nur der Kern des Elektromagneten 18 dargestellt ist, wird für diesen nachfolgend weiter die Bezeichnung Elektromagnet 18 verwendet.

Der Elektromagnet 18 bzw. dessen Kern und die Feder 19 bewirken das Öffnen und Schließen der Messkammer 11 durch deren axiales Verschieben entsprechend des Doppelpfeils (Figur 1). Der Mantel 16 wird durch angedeutete Befestigungsmittel 21 (siehe **Figuren 1** **und** **4****)** in der Fluidleitung 1 fixiert (axial- und drehfest).

Die drehfeste axiale Verschiebbarkeit der Messkammer 11 im Mantel 16 wird beispielsweise durch ineinandergreifende Formelemente realisiert (nicht dargestellt). Zum Beispiel kann ein radial nach außen weisender Vorsprung am zylinderartigen Gehäuse 11.1 vorgesehen sein, der in eine Nut des Mantels 16 eingreift oder der Mantel 16 besitzt einen radial nach innen weisenden Vorsprung, der mit einer Nut im Gehäuse 11.1 korrespondiert (nicht dargestellt).

Bei den Varianten gemäß **Figur 1 bis 3** weisen das erste und zweite Verschlusselement 11.3, 11.4 an ihren Außenseiten gerade Flächen auf.

Bei den Varianten der **Figur 4** sind die Außenflächen der Verschlusselemente 11.3, 11.4 jeweils in Form eines Kegels 22 ausgebildet, wodurch sich ein geringerer Strömungswiderstand ergibt.

Die Fluidleitung 1 weist gemäß der **Figuren 1 bis 4** in dem hier oberen Bereich einen ersten Zugang 2 auf, durch welchen eine erste Kabelführung K1 zum ersten Schallwandler 14 führt sowie einen zweiten Zugang 3 durch den eine zweite Kabelführung K2 zum zweiten Schallwandler 15 führt. Die Zugänge 2 und 3 sind selbstverständlich fluiddicht geschlossen.

Weiterhin kann zu der Fluidleitung 1 gemäß der **Figuren 1** **und** **4** ein dritter Zugang 4, beispielsweise für einen Drucksensor (nicht dargestellt) und/oder ein vierter Zugang 5, beispielsweise für einen Temperatursensor (nicht dargestellt), führen.

Die **Figuren 2** **und** **3** zeigen die Prinzipskizzen eines Schallgeschwindigkeitssensors 10, der in einer Fluidleitung 1 angeordnet ist in einer geöffneten zweiten Position der Messkammer 11 **(****Figur 2****)** und in einer geschlossenen zweiten Position (Messposition) der Messkammer 11 **(****Figur 3****)** in vergrößerter Darstellung im Längsschnitt.

Es ist aus **Figur 2** ersichtlich, dass die Messkammer 11 des Schallgeschwindigkeitssensors 10 durch den hier aktivierten Elektromagneten 18, der die Feder 19 entgegen ihrer Federkraft zusammendrückt, um einen Stellweg s (hier nach rechts) verschoben wird, wodurch das erste Verschlusselement 11.3 um den Stellweg s von dem radial nach innen weisenden Anschlag 16.1 des Mantels 16 beabstandet ist.

Dadurch liegen die Eintrittsöffnungen 12 und die Austrittsöffnungen 13 frei und das Fluid FL strömt aus der Fluidleitung 1 durch die Eintrittsöffnungen 12 in die Messkammer 11 und durch die Austrittsöffnungen 13 aus der Messkammer 11 in die Fluidleitung 1. Weiterhin strömt Fluid FL um den Schallgeschwindigkeitssensor 10 herum. In dieser Position erfolgt bevorzugt keine Messung.

Gemäß **Figur 3** wurde die Messkammer 11 um den Stellweg s in die erste Position bewegt, in welcher eine Messung mittels der Schallwandler 14, 15 erfolgen kann. Das erste Verschlusselement 11.3 liegt an dem radial nach innen weisenden Anschlag 16.1 des Mantels 16 an, so dass die Eintrittsöffnungen 12 verschlossen sind. Die Austrittsöffnungen 13 in dem Gehäuse 11.1 der Messkammer 11 wurden durch den Mantel 16 ebenfalls verschlossen, da das Gehäuse 11.1 entsprechend weit in den Mantel 16 hineingeschoben wurde.

Das Fluid FL ist nun in der Messkammer 11 eingeschlossen. Das eingeschlossene Fluid FL ist hier zur Verdeutlichung in kurzen Strichen schräg schraffiert.

In **Figur 4** ist die Ausführung eines Schallgeschwindigkeitssensors 10 in der ersten Position (Messposition) dargestellt, der im Unterschied zu den Varianten in den Figuren 1 bis 3 endseitige Verschlusselemente 11.3, 11.4 aufweist, deren Außenseiten in Form eines Kegels 22 ausgebildet sind.

Entsprechend ist auch der Anschlag 16.1 ausgebildet. Zusätzlich ist eine Dichtung 25 zwischen dem Kegel 22 des ersten Verschlusselements 11.3 und dem Anschlag 16.1 vorgesehen.

Ansonsten entspricht der Aufbau des Schallgeschwindigkeitssensors nach Figur 4 im Wesentlichen den Ausführungen der Figuren 1 bis 3.

Der Schallgeschwindigkeitssensor 10 ist gemäß Figur 4 in eine Leitung 1 mit einem ersten Befestigungsflansch 6 mit Bohrungen 7 und einem zweiten Befestigungsflansch 8 mit Bohrungen 9 zur Befestigung in einem Leitungssystem versehen.

Es ist aus den **Figuren 2 bis 4** auch ersichtlich, dass in dem ersten Verschlusselement 11.3 in Richtung zum Hohlraum 11.2 der Messkammer 11 eine erste Aussparung 23 vorhanden ist, in welche der erste Schallwandler 14 schwingfest mit dem Diaphragma fixiert ist. In dem gegenüberliegenden zweiten Verschlusselement 11.4 der Messkammer 11 ist ebenfalls in Richtung zum Hohlraum 11.2 eine Aussparung 24 vorgesehen, in welche der zweite Schallwandler 15 schwingfest mittels des Diaphragmas fixiert ist.

Die Schallwandler 14, 15 sind jeweils an einen nicht bezeichneten Deckel montiert, welcher an der in Richtung zum Hohlraum 11.2 der Messkammer 11 weisenden Stirnseite (nicht bezeichnet) des jeweiligen Verschlusselementes 11.3, 11.4 befestigt ist, so dass die Schallwandler 14, 15 in die Aussparungen 23, 24 ragen.

Weiterhin ist es wichtig zu erwähnen, dass der feste Kontakt mit dem Metall (Diaphragma) als elektrische Leitung genutzt wird, sodass ein elektrisches Signal angelegt werden kann. Die Messkammer dient dabei als Leiter.

Wichtig ist die elektrisch leitende und schwingfeste Verbindung der Schallwandler mit der Messkammer über den Hohlraum bzw. die Senkung im Deckel.

Die PZT (piezoelektrische Ultraschallwandler) werden hierbei so fest aufgedrückt, sodass feinste Oberflächen-Spitzen im Metall / Diaphragma durch die Rauheit mit der leitenden goldbeschichteten Oberfläche des Piezokeramischen Materials (PZT) in Kontakt treten.

Erstreckten sich die Deckel bis zum nicht bezeichneten Außendurchmesser der Verschlusselemente 11.3, sind auch in den Deckel auf der Eintrittsseite des Fluids Löcher integriert, die das Durchströmen des Fluids FL ermöglichen.

Zwischen den Aussparungen 23, 24 der Verschlusselemente 11.3, 11.4 ist in Richtung Hohlraum 11.2 der Messkammer 11 eine dünne trennende Wand vorhanden, die zur Bildung der Messkammer bzw. des Hohlraums der Messkammer dient.

Diese dünne trennende Wand ist ein Diaphragma als Grenze zum Hohlraum 11.2 der Messkammer 11, welches bevorzugt aus Edelstahl oder einem anderen geeigneten leitenden Werkstoff besteht.

Dabei befindet sich zwischen der ersten Aussparung 23 und dem Hohlraum 11.2 der Messkammer 11 ein erstes Diaphragma 23.1 und zwischen der zweiten Aussparung 24 und dem Hohlraum 11.2 der Messkammer 11 ein zweites Diaphragma 24.1. Diese sind an Deckeln befestigt. Die Deckel sind in den Figuren 1 bis 3 nicht dargestellt, aber aus Figur 4 ersichtlich, jedoch nicht bezeichnet.

Nicht bezeichnete Durchgangsöffnungen in den Verschlusselementen 11.3, 11.4 führen die Anschlussleitungen (ebenfalls nicht bezeichnet) durch die Kabelführungen K1, K2 zu den Schallwandlern 14, 15 in den Aussparungen 23, 24 (siehe ebenfalls **Figuren 2 bis 4****).** Die Verschlusselemente 11.3, 11.4 sind bevorzugt zweiteilig ausgeführt, dies ist in Figur 4 erkennbar.

Durch den Einsatz des Schallgeschwindigkeitssensors als In-Line Sensor innerhalb einer Fluidleitung entstehen nur geringe Druckverluste. Es sind damit Fluide in Form von Gasgemischen, Reingase, und ggf. auch mehrphasige Gemische prüfbar. Die erfindungsgemäße Lösung ermöglicht auch die individuelle mechanische Einbindung in Rohrsysteme, z.B. über geeignete Flanschverbindungen wie spezielle Industrieflansche. Die erfindungsgemäße Lösung besitzt einen robusten Aufbau und ist durch die In-Line-Anordnung vor äußeren mechanischen Beschädigungen geschützt. Vorteilhafter Weise ist der erfindungsgemäße Schallgeschwindigkeitssensor auch für hohe und niedrige Temperaturen einsetzbar.

### Bezugszeichenliste

- 1: Fluidleitung
- 2: erster Zugang
- 3: zweiter Zugang
- 4: dritter Zugang
- 5: vierter Zugang
- 6: erster Befestigungsflansch
- 7: Bohrungen
- 8: zweiter Befestigungsflansch
- 9: Bohrungen
- 10: Schallgeschwindigkeitssensor
- 11: Messkammer
- 11.1: Gehäuse der Messkammer
- 11.2: Hohlraum der Messkammer
- 11.3: erstes Verschlusselement
- 11.4: zweites Verschlusselement
- 12: Eintrittsöffnung
- 13: Austrittsöffnung
- 14: erster Schallwandler
- 15: zweiter Schallwandler
- 16: Mantel
- 16.1: radial nach innen weisender Anschlag
- 17: Stößel
- 18: Elektromagnet
- 19: Feder
- 20: Ausstülpung der Fluidleitung 1
- 21: Befestigungsmittel
- 22: Kegel
- 23: erste Aussparung
- 23.1: erstes Diaphragma
- 24: zweite Aussparung
- 24.1: zweites Diaphragma
- 25: Dichtring
- A: Längsachse
- AB: Abströmrichtung
- AN: Anströmrichtung
- FL: Fluid
- K1: erste Kabelführung
- K2: zweite Kabelführung
- s: Stellweg

## Patentansprüche

1. Schallgeschwindigkeitssensor (10) für ein Fluid (FL), mit mindestens einer Messkammer (11), in welcher mindestens ein Schallwandler (14, 15) angeordnet ist, wobei zu der Messkammer (11) mindestens eine Eintrittsöffnung (12) und mindestens eine Austrittsöffnung (13) führt und die Messkammer (11) von dem Fluid (FL) zur Realisierung einer Messung befüllbar/durchströmbar ist, wobei der Schallgeschwindigkeitssensor (10) in einer von dem Fluid (FL) durchströmten Fluidleitung (1) angeordnet ist und von Fluid (FL) umströmt ist, wobei die Messkammer (11) in einem diese umfangsseitig umhüllenden Mantel (16) axial verschiebbar und drehfest angeordnet ist und der Mantel (16) in der Fluidleitung (1) gestellfest positioniert ist.

2. Schallgeschwindigkeitssensor (10) nach Anspruch 1, **dadurch gekennzeichnet, dass** in der Messkammer (11) nach der Eintrittsöffnung (12) mindestens ein erster Schallwandler (14) und vor und/oder nach der Austrittsöffnung (13) mindestens ein zweiter Schallwandler (15) angeordnet ist, wobei der erste und der zweite Schallwandler (14, 15) mit einer Mess-/Auswerteeinheit verbunden sind.

3. Schallgeschwindigkeitssensor (10) nach einem der vorgenannten Ansprüche, **dadurch gekennzeichnet, dass** die mindestens eine Eintrittsöffnung (12) der Messkammer (11) und/oder die mindestens eine Austrittsöffnung (13) zur Durchführung einer Messung verschließbar ist/sind.

4. Schallgeschwindigkeitssensor (10) nach einem der vorgenannten Ansprüche, **dadurch gekennzeichnet, dass** an dem Mantel (16) wenigstens ein radial nach innen weisender Anschlag (16.1) vorhanden ist, mit dem die mindestens eine Eintrittsöffnung (12) verschließbar ist und/oder dass mit einem zylindrischen Bereich des Mantels (16) die mindestens eine Austrittsöffnung (13) der Messkammer (11) verschließbar ist.

5. Schallgeschwindigkeitssensor (10) nach einem der vorgenannten Ansprüche, **dadurch gekennzeichnet,**
- **dass** die Messkammer (11) in einer ersten Position, in welcher eine Messung erfolgt, an dem radial nach innen weisenden Anschlag (16.1) anliegt und die Eintrittsöffnung (12) verschlossen ist und dass die Austrittsöffnung (13) durch den Mantel (16) verschlossen ist und
- **dass** die Messkammer (11) in einer zweiten Position, in welcher keine Messung erfolgt, von dem Anschlag (16.1) beabstandet ist und die mindestens eine Eintrittsöffnung (12) frei ist und der Mantel (16) die Austrittsöffnung (13) freigibt, so dass durch die Eintrittsöffnung (12) Fluid (FL) aus der Leitung (1) in die Messkammer (11) eintritt und aus der Austrittsöffnung (13) aus der Messkammer (11) in die Fluidleitung (1) austritt.

6. Schallgeschwindigkeitssensor (10) nach Anspruch 5, **dadurch gekennzeichnet, dass** die Messkammer (11) mit einem Elektromagneten (18) in Wirkverbindung steht, bei dessen Betätigung die Messkammer (11) entgegen einer Federkraft einer Feder (19) aus der ersten Position in die zweite Position innerhalb des Mantels (16) um einen Stellweg (s) axial verschiebbar ist.

7. Schallgeschwindigkeitssensor (10) nach einem der vorgenannten Ansprüche, **dadurch gekennzeichnet, dass** die Eintrittsöffnungen (12) und/oder die Austrittsöffnungen (13) axial und/oder radial und parallel oder im Winkel zur Längsachse (A) des Schallgeschwindigkeitssensors (10) von dem Hohlraum (11.2) der Messkammer (11) nach außen in die Fluidleitung (1) führen.

8. Schallgeschwindigkeitssensor (10) nach einem der vorgenannten Ansprüche, **dadurch gekennzeichnet, dass** die Messkammer (11) ein im Wesentlichen zylindrisches Gehäuse (11.1) mit einem Hohlraum (11.2) und an beiden Enden des Gehäuses (11.1) Verschlusselemente (11.3, 11.4) aufweist, die an ihren Außenseiten flach oder in Form eines Kegels (22) ausgebildet sind, wobei das erste Verschlusselement (11.3) axial verlaufende Eintrittsöffnungen (12) aufweist und vor dem zweiten Verschlusselement (11.4) in dem Gehäuse (11.1) radial verlaufende Austrittsöffnungen (13) angeordnet sind.

9. Schallgeschwindigkeitssensor (10) nach einem der vorgenannten Ansprüche, **dadurch gekennzeichnet, dass** die Austrittsöffnungen (13) durch das zweite Verschlusselement (11.4) führen.

10. Schallgeschwindigkeitssensor (10) nach einem der vorgenannten Ansprüche, **dadurch gekennzeichnet, dass** das erste Verschlusselement (11.3) in Richtung zum Hohlraum (11.2) der Messkammer (11) den ersten Schallwandler (14) und das zweite Verschlusselement (11.4) in Richtung zum Hohlraum (11.2) der Messkammer (11) den zweiten Schallwandler (15) aufweist.

11. Schallgeschwindigkeitssensor (10) nach einem der vorgenannten Ansprüche, **dadurch gekennzeichnet, dass** die Austrittsöffnungen (13) einen größeren Durchmesser aufweisen als die Eintrittsöffnungen (12).

12. Schallgeschwindigkeitssensor (10) nach einem der vorgenannten Ansprüche, **dadurch gekennzeichnet, dass** der erste und zweite Schallwandler (14, 15) aus identischen Piezokeramiken bestehen und dass beide Schallwandler (14, 15) zum Messen und zum Anregen ausgebildet sind.
